# EUROPEAN PATENT APPLICATION

(11) **EP 4 653 748 A1**
(43) Date of publication of application: **26.11.2025**
(21) Application number: 25177287.7
(22) Date of filing: 19.05.2025
(51) Int. Cl.: F16M 11/22

(54) **A STAND FOR A FLAT PANEL DISPLAY**

(30) Priority: 22.05.2024 GB 202407263
(71) Applicant: Urben Technologies Holdings Ltd, St Albans Hertfordshire AL3 6PA (GB)
(72) Inventor: Entwistle, Michael, St Albans, AL3 6PA (GB); Robinson, Daniel, St Albans, AL3 6PA (GB)
(74) Representative: Dolleymores

(57) **Abstract**

The present invention relates to a compact stand (1) for a flat panel display wherein a tower (3) of the stand comprises an audio visual - AV - rack (21) for mounting electrical components (22) thereon, the tower being arranged to establish convection currents to cool the components housed inside.

## Description

The present invention relates to a stand for a flat panel display and more particularly to a stand for a smaller free standing flat panel display.

Flat panel displays, of the type used in conference facilities, will often be wall mounted and form part of a larger display unit. The display unit will normally comprise a housing, to accommodate not only one or more flat panel displays but also speakers, microphones and one or more cameras used for video conferencing.

The flat panel display, or displays, will typically be mounted at the approximate eye level of an expected audience and the display unit in which they are housed will normally also comprise a storage space extending below the flat panel display to the floor. This storage space may be used to both conceal any support structure for the flat panel displays and to house electronic audiovisual (AV) equipment and associated cabling of the display unit.

Free standing display units for conference facilities are also relatively common and these normally each comprise a stand housing a flat panel display. The display unit is movable by the stand being arranged to slide or roll to an appropriate location. The stand normally has the flat panel display again mounted at the approximate eye level of an expected audience, with storage below the display for AV equipment and cabling.

As audio video conferencing becomes more common place, there is a requirement for more compact and less expensive conferencing facilities, without the requirement to have dedicated conference rooms with wall mounted displays, or to have dedicated conference spaces and relatively large and expensive free standing display units.

The present invention aims to provide a stand for a flat panel display which is suitable for video conferencing and which addresses the above requirements.

According to the present invention there is provided a stand for a flat panel display, the stand comprising a mounting plate arranged to be fastened to a flat panel display and a tower for directly or indirectly supporting the mounting plate, wherein the tower is in the form of a tubular or channel shaped structure having a longitudinal axis which, in use, extends substantially vertically, the tower comprising a mounting at or towards an upper end for receiving the mounting plate or for receiving a bracket for the mounting plate, with the tower further comprising an access opening into the tower, wherein: the stand further comprises an audio visual - AV - rack for mounting electrical components on; the AV rack is located inside the tower and is accessible through the access opening; the tower further comprises at least one further opening above the intended position of electrical components on the AV rack and at least one further opening below the intended position of electrical components on the AV rack; and the further openings are arranged to, in use, permit the convection of air through the tower and over the electronic components mounted on the AV rack.

A stand in accordance with the present invention may be particularly compact, comprising only a single central supporting tower and preferably the AV rack extends vertically in the tower, this permitting a more compact arrangement and permitting the convection of air through the tower. This permits the stand to be relatively easily placed on, or secured to, an item of furniture such as credenza, in order to position a flat panel display mounted to the stand at an appropriate level to be at the approximate eye level of an expected audience.

The present invention utilises the strength of a tubular or channel shaped structure to form the tower, in order to provide a particularly compact and strong support for the mounting plate for the flat panel display. However, the present invention additionally utilises the space within the tower to house electrical audiovisual components and/or a personal computer (PC), which on larger display units would normally be placed in the housing of such a display unit, below a flat panel display of the display unit, as described above. The present invention permits the stand to incorporate electronic audiovisual components and/or a PC so that the whole stand, with or without a flat panel display attached, may be moved as a complete unit with the associated electronic audiovisual components and/or PC and with the audiovisual components hidden from sight in a particularly aesthetically pleasing manner. The compact nature of the tower housing the electronic audiovisual components is made possible by the realisation that in use the tower will be arranged vertically and thus, by providing the further openings above and below the electronic components mounted on the AV racks, the tower structure can be used to induce significant convection currents, permitting the electronic components to be placed in a smaller space than may otherwise be acceptable, without use of additional cooling equipment.

The stand is preferably tubular and substantially enclosed and further comprises an access panel arranged to cover the access opening, for such a panel may not only obscure the electronic components mounted on the AV rack from sight, but it may also assist in establishing strong convection currents within the enclosed tower.

Preferably, the AV rack is removable from the tower through the access opening and is arranged to be removed with electronic components mounted thereon. This permits the components and associated cabling to be mounted to an AV rack and the AV rack then, as a complete unit, to be inserted through the access opening into the tower, with it then only being necessary to establish additional links from the electronic components housed within the tower on the AV rack to external inputs and to a flat panel display or any other electronic equipment external to the tower, such as a video camera.

Preferably, the AV rack hooks, or slots, into place on one or more mounts provided inside the tower, so that the rack may conveniently be placed in a desired position and subsequently easily retrieved for making modifications or adding further components. However, the AV rack may additionally be arranged to be secured in place by a fastening, once initially located and held in place in the tower.

Where the rack extends vertically in the tower, the tower in a plane perpendicular to a vertical axis of the tower and bisecting the rack, preferably has an internal width of between 180 mm and 250 mm and a depth of between 70 and 150 mm. This permits a micro PC mounted on the rack to be accommodated within the tower with sufficient space for air to be convected up the tower past the micro PC.

Preferably, the tower has a closed upper end with a number of louvre vents located at or towards its upper end forming the at least one further opening above the intended position of electronic components on the AV rack. The louvre vents can be arranged to efficiently convect air from inside the tower while obscuring from view the electronic components housed within the tower and deterring the insertion of cables through the opening shielded by the louvres, which cables may restrict the passage of air through the opening.

Preferably, the tower comprises cable entry openings towards both the top and bottom of the tower, to permit cables to pass into and out of the tower. In this manner, cables may pass out of the tower to the display unit and any other ancillary equipment through cable entry openings towards the top of the tower, where such cables will be obscured from view of a user or audience viewing a flat panel display supported by the stand.

Although preferable that louvres be provided to allow air to both flow into the bottom of the tower and out of the top of the tower, in some arrangements at least some of the cable entry openings may also form either the at least one further opening above, or the at least one further opening below, the intended position of electronic components on the AV rack, which openings, in use, permit the convection of air through the tower.

The tower may be at least partly closed at or towards a lower end by an end plate extending across the base of the tower, the end plate being arranged to receive fixings to secure the tower to a base or base plate. In this manner, the tower may be secured directly to an item of furniture such as a credenza. However, alternatively, the stand may further comprise a base plate arranged to be secured to the end plate of the tower by fixings, the dimensions of the base plate being sufficient to, in use, maintain the tower in an upright position so that the stand may be free standing. In this manner, the stand, together with a flat panel display mounted thereon, may form a complete free standing display unit which may be easily positioned and orientated.

The end plate of the tower preferably comprises an opening to permit cables to pass into the tower through the base of the tower from a credenza or other item of furniture on which the tower is positioned, thus obscuring the cables from view.

The mounting plate for a flat panel display is preferably a Video Electronics Standard Association - VESA^{®} - mounting plate as this a standard mounting plate that will accept many types of flat panel displays.

The mounting plate for a flat panel display may comprise a mounting for a camera, either above or below the flat panel display, to permit an appropriately mounted camera to form part of a display unit.

A flat panel display may be directly mounted on the mounting plate. Alternatively, one or more flat panel displays may be mounted on a bracket and the bracket mounted to the tower.

Advantageously, the mounting at or towards the top end of the tower comprises one or more pairs of slots for receiving hooks on a mounting plate or a bracket. This enables the mounting plate, or bracket with the mounting plate attached to it, to be mounted on to the tower without the use of tools.

Preferably the mounting at or towards the top end of the tower comprises multiple pairs of vertically spaced apart sets of slots permitting a mounting plate or bracket to be mounted to the tower at one of two or more vertical positions.

Each component of the stand may be formed from folded flat metal sheet and the stand may be arranged to be flat-packed, with all components, except for a base plate, being arranged to be assembled without the requirement of fixings.

Because the stand is intended to be mounted or stood on another item, such as credenza, the height of the tower is preferably less than 1.2 m.

Two embodiments of the present invention will now be described, by way of example only, with reference to the accompanying figures, of which:
Figure 1 is a rear right perspective view of a stand in accordance with the present invention.
Figure 2 is a rear left perspective view of the stand of Figure 1, but with a rear access panel removed;
Figure 3 is a rear right perspective view of the stand of Figure 2 with a rear access panel and an audiovisual rack removed;
Figure 4 is a front left perspective view of the stand of Figure 3;
Figure 5 is a front left perspective view of the VESA^{®} plate and camera mounting plate of Figure 4;
Figure 6 is a right side elevation of Figure 5;
Figure 7 corresponds to Figure 4 but shows the camera mounting plate removed from the VESA ^{®} mounting plate;
Figure 8 is a front left perspective view of the camera mounting plate of Figure 5;
Figure 9 is a rear right perspective view of the tower of the stand of Figure 2;
Figure 10 is a rear right perspective view of the audiovisual rack of the stand of Figure 2; and
Figure 11 is a rear perspective view of a second embodiment of a stand in accordance with the present invention, having two VESA ^{®} mounting plates mounted to the tower of a stand via an additional bracket.

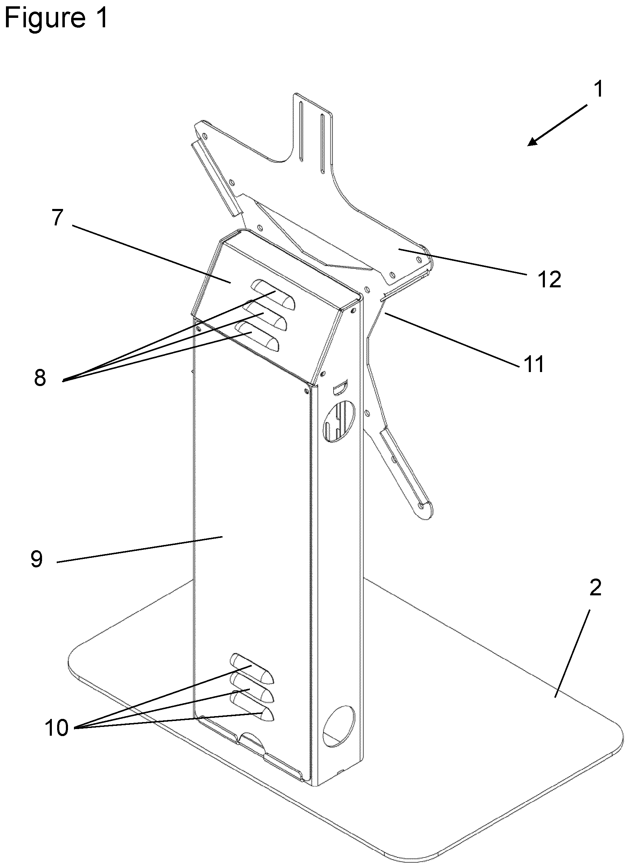

Figure 1 shows a stand, indicated generally as 1, in accordance with the present invention. In the embodiment illustrated in Figure 1 the stand 1 comprises an optional base plate 2 to which a tower 3 of the stand 1 is secured. The base plate 2 has dimensions sufficient to prevent the stand 1 toppling over when a display unit (not shown) is mounted on the stand 1. However, in alternative embodiments, the base plate 2 may not be present and the tower 3 may then be secured by fastenings to an item of furniture, such as a credenza.

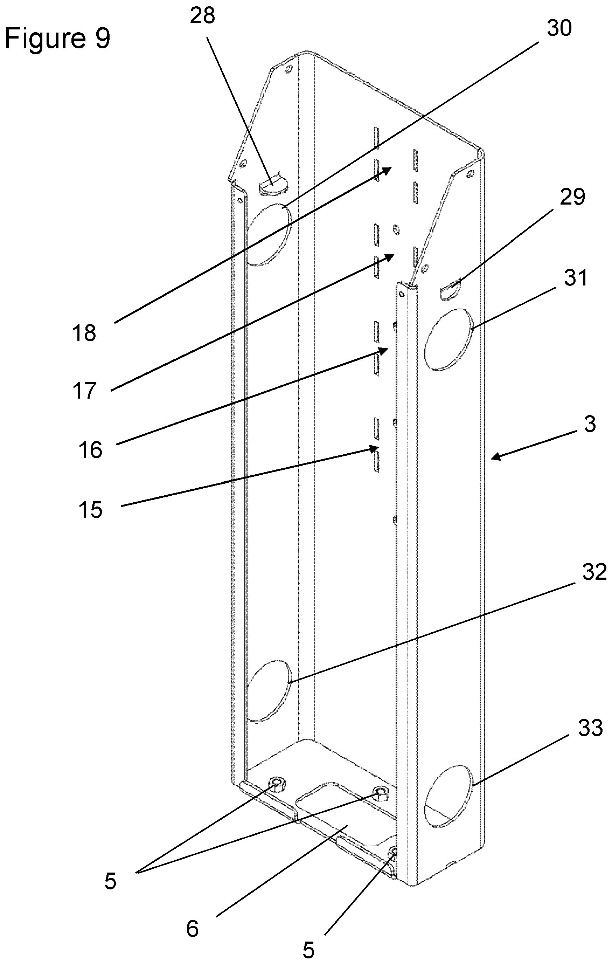

The tower 3, is shown in isolation in Figure 9. The tower 3 is in the form of a C-shaped channel folded from a metal sheet, with an end plate 4 welded or attached by other means across the base of the tower 3. The end plate 4 acts to retain the shape of the channel of the tower 3 and it also has securing points, in this embodiment in the form of three captive nuts 5, for receiving fastenings for either fastening the tower 3 to the optional base plate 2 of Figure 1, or for securing the tower 3 directly to an item of furniture, such as credenza. The integral end plate 4 of the tower 3 has an opening 6 so that when mounted on a credenza, or similar item of furniture, cables may pass directly into the base of the tower 3 through a top of the item of furniture to which the tower 3 is fixed.

Returning to Figure 1, the stand 1 further comprises a louvered plate 7 fastened to the top of the tower 3, which plate has three louvers 8 extending there across. The stand 1 further comprises an access panel 9 closing the open side of the C-shaped tower 3. The access panel 9 has an additional three louvers 10 extending across a lower end of the access panel 9.

The two sets of louvers 8 and 10, together with the vertical tubular structure of the tower 3, when the access panel 9 is in place, defines a convection passage through the stand 1.

The stand 1 further comprises a VESA ^{®} mounting plate 11 and, optionally, this has attached thereto a camera mounting plate 12.

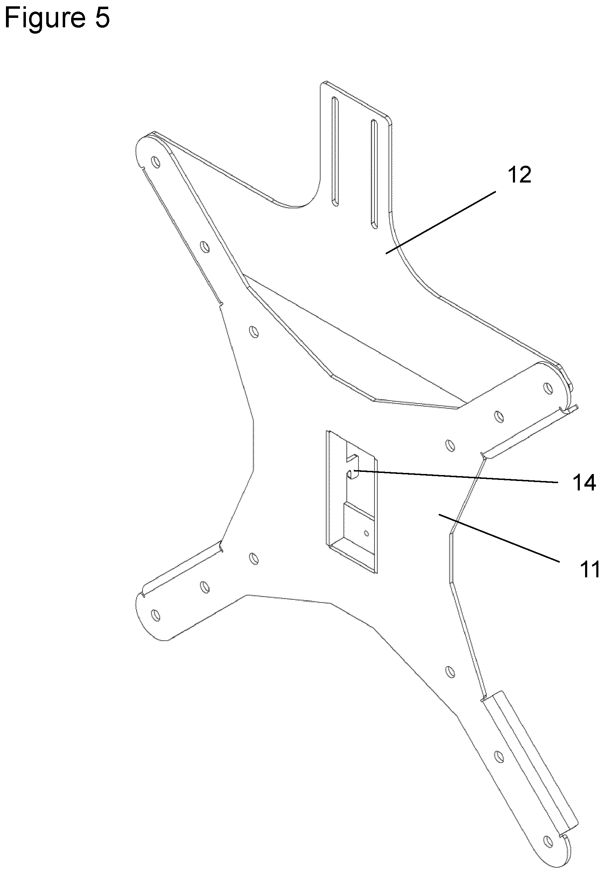

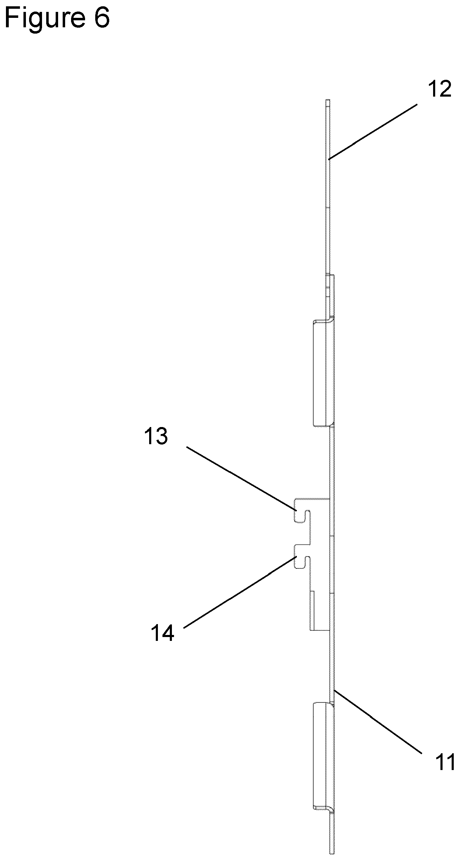

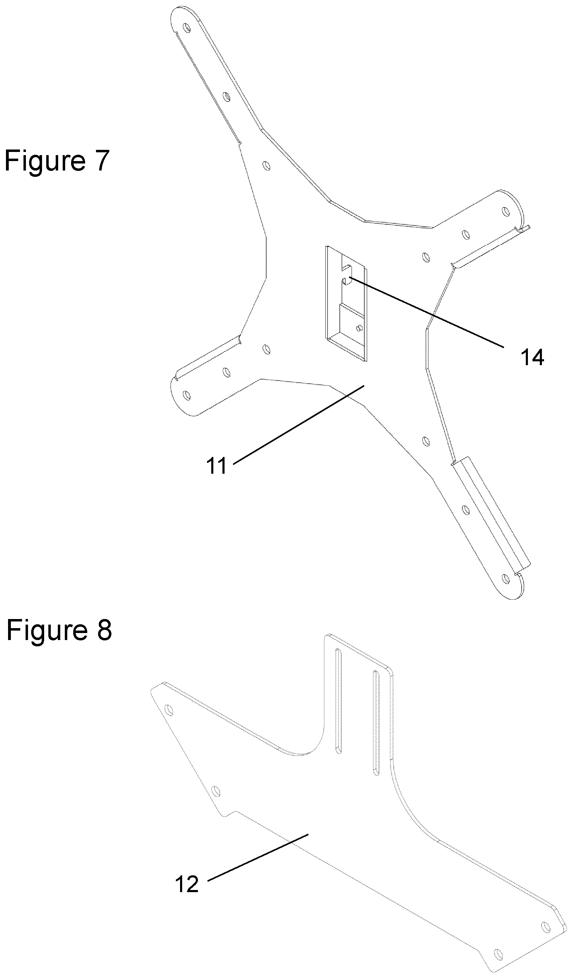

The VESA ^{®} mounting plate 11 and camera mounting plate 12 are shown fixed together, but in isolation from the other components of the stand in Figure 5, with the VESA ^{®} mounting plate 11 shown in isolation in Figure 7 and the camera mounting plate 12 shown in isolation in Figure 8. The VESA ^{®} mounting plate 11 and camera mounting plate 12 are also shown in side elevation in Figure 6. This shows the righthand ones of an upper pair of hooks and a lower pair of hooks 13, 14 of the VESA ^{®} mounting plate 11, with the lower right hook 14 of the lower pair of hooks also visible in Figures 5 and 7.

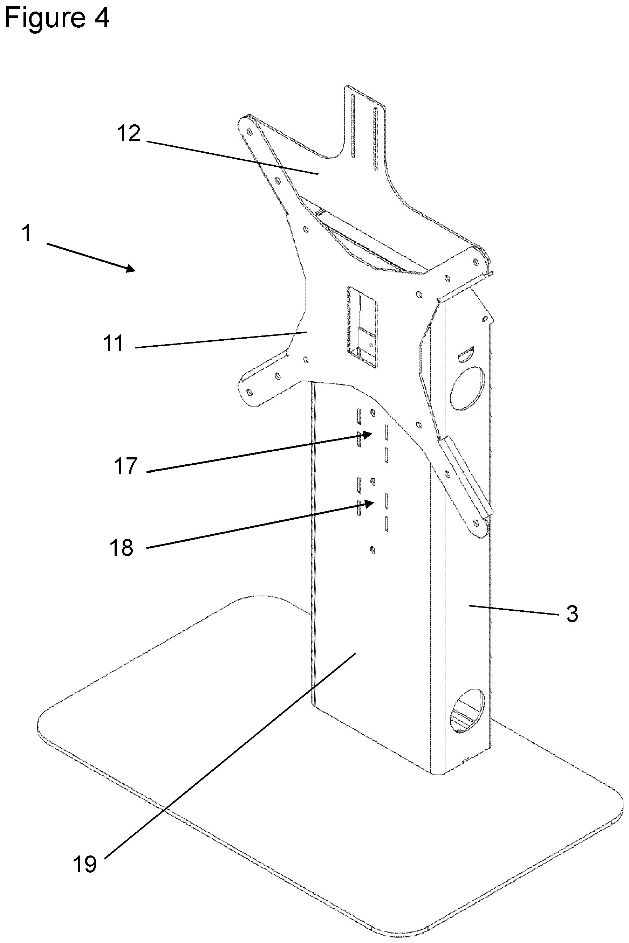

The upper and lower pairs of hooks 13 and 14 are arranged to engage with any selected one of four sets of slots 15 to 18 formed in a front face 19 of the tower 3, the lower two sets of slots, 17 and 18, can be seen in Figure 4, with all four sets of slots, 15 to 18, being at lease partly visible in Figure 9. The multiple sets of slots enable a flat panel display (not shown) and possibly a camera (not shown) to be mounted via the VESA ^{®} mounting plate 11 to an upper portion of the tower 3, as shown in Figure 4, by being hooked into place on one of the respective sets of slots 15 to 18, to mount the flat panel display at a desired level.

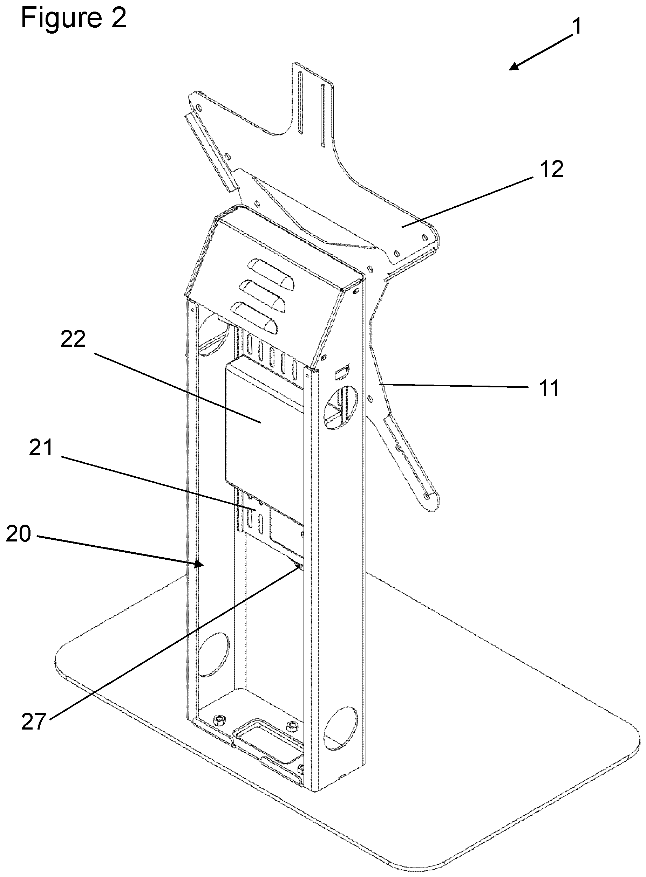

Referring now to Figure 2, this corresponds to Figure 1 but shows the access panel 9 removed to provide an access opening 20 into the tower 3.

With the access panel 9 removed, an audio visual rack (AV rack) with electronic AV components 22 can be seen housed within the tower 3. The AV components 22 will be specific to customer requirements and will normally be secured to the AV rack by the customer.

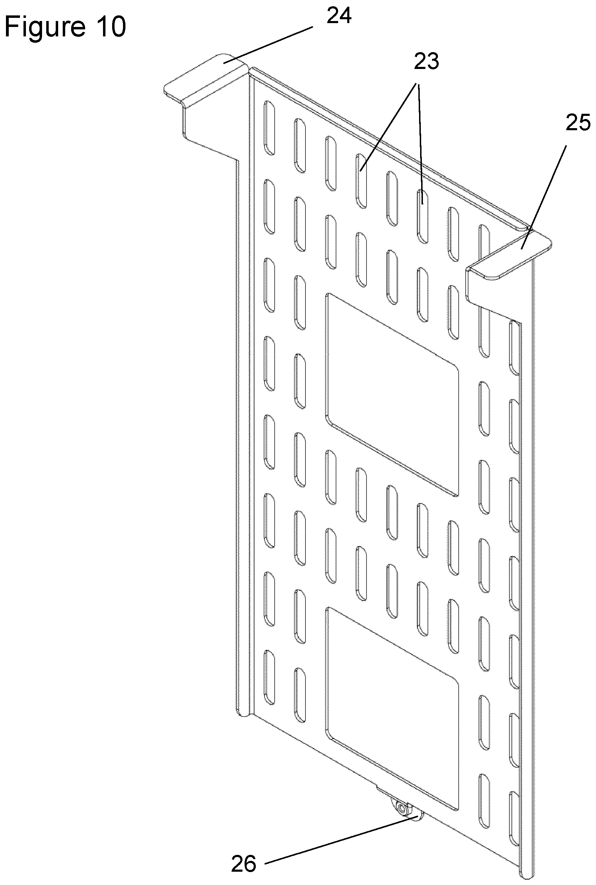

The AV rack is shown in isolation in Figure 10. The AV rack is folded from a sheet of metal having a number of slots 23 formed in it, to permit the electrical AV components, other components and cabling to be secured to the AV rack 21 in a standard manner, such as by the use of fastenings or cable ties. Extending from the top and to either side of the AV rack 21 are two lugs 24 and 25 and from the bottom a further lug 26 for retaining a fastening 27, seen in Figure 2.

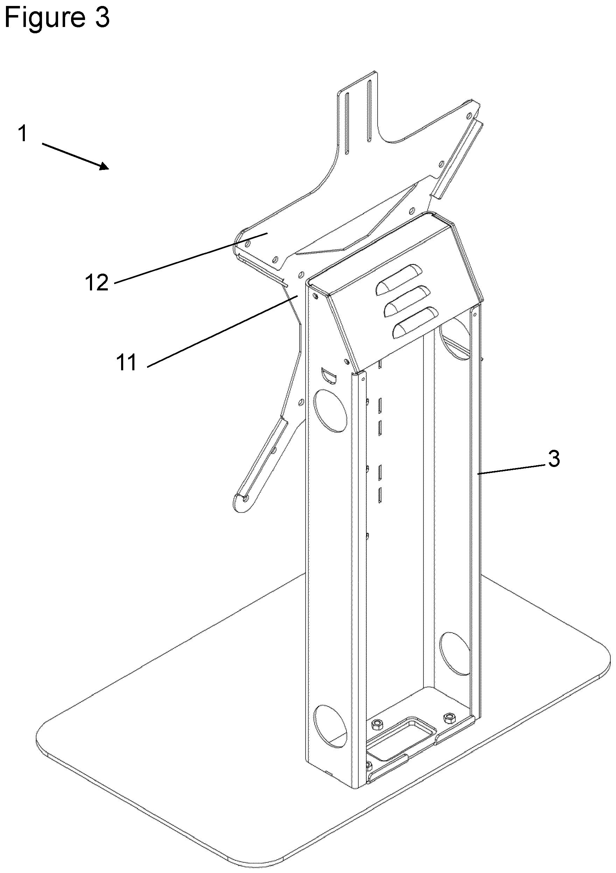

The fastening 27 retains the AV rack 21 and associated components 22 in place in the tower 3, but to permit installation, servicing or replacement of a component 22, the rack 21 may be removed, together with one or more components 22 thereon, by first releasing the fastening 27, which secures the rack 21 in place, and then lifting the rack 21 out of the tower 3 so that the tower 3 will be as shown in Figure 3.

To insert the AV rack 21 and associated components 22 into the tower 3, the rack may be positioned in the tower 3, with the upper lugs 24 and 25 of the AV rack 21, (seen in Figure 10), first being located on a pair of pressed in tabs 28 and 29, which can be most clearly seen in Figure 9, showing the tower 3 in isolation. The fastening 27 is then used to lock the AV rack 21 in place within the tower 3.

As can perhaps be seen most clearly from Figure 9, the tower 3 comprises four further openings 30 to 33, two formed in each respective side of the tower 3, with upper ones 30 and 31 of the further openings being arranged to permit cables to pass out of the tower to a flat panel display and any other equipment supported by the stand, such as any camera, microphone or speakers.

The lower ones 32 and 33 of the further openings are arranged to permit cables to enter the tower from locations remote from the stand 1 and these may, for example, be a power cable, ethernet cable or video cable.

In use, the stand 1 may support a flat panel display unit and associated items such as a camera, microphone or speakers mounted on, or via, the VESA ^{®} plate 11 and allow these to be mounted at a desired height on the stand. The stand 1 may then permit these all to be moved together with the stand and the associated AV components housed within the stand, particularly when mounted on the optional base plate 2. However, the form of the tower 3 permits the electronic AV components 22 to be concealed within the tower 3, whilst also permitting convection currents within the tower to cool those components.

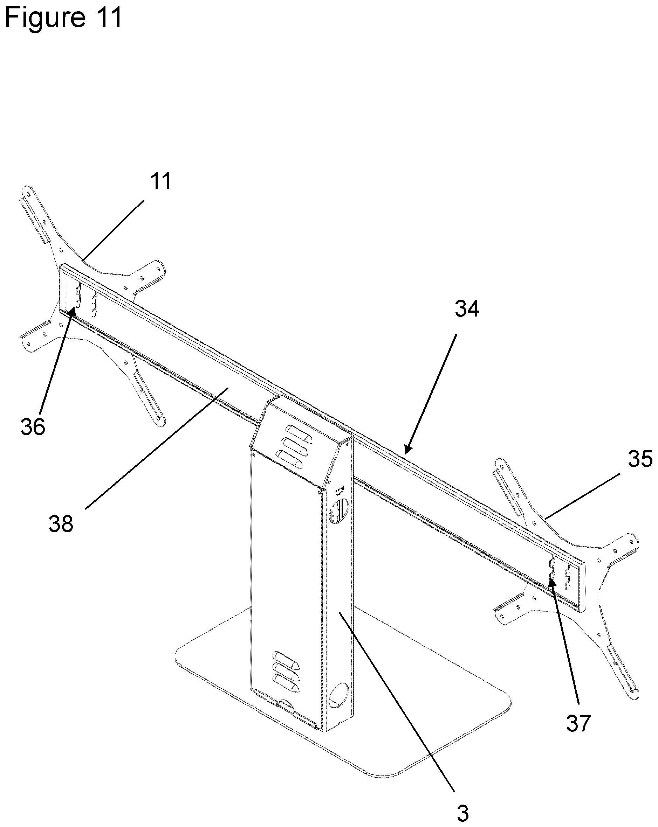

The stand 1 is not limited to the mounting of a single display unit and Figure 11 shows how a bracket 34 may be arranged to mount two identical VESA ^{®} plates 11 and 35 to the tower 3 in a side by side arrangement.

The bracket 34 has a first set of slots 36 at one end and a second set of slots 37 at an opposite end, with each set of slots 36, 37 arranged to receive the upper and lower pairs of hooks 13 and 14 of the respective VESA ^{®} mounting plates 11 and 35. The bracket 34 has, midway along its rear face 38, two pairs of rearward protruding hooks (not shown) identical to the upper and lower pairs of hooks 13 and 14 on the VESA ^{®} mounting plates. The two pairs of hooks of the bracket 34 engage with a selected one of the sets of slots 15 to 18 provided in the front face of the tower 3, in order to secure the bracket to the tower in one of four vertical positions, as shown in Figure 11.

Two embodiments of the present invention have been described above with reference to the figures, however it will be appreciated that these embodiments are not limiting and the skilled person may envisage alternative embodiments and modifications which fall within the scope of the following claims.

## Claims

1. A stand for a flat panel display, the stand comprising a mounting plate arranged to be fastened to a flat panel display and a tower for directly or indirectly supporting the mounting plate, wherein the tower is in the form of a tubular or channel shaped structure having a longitudinal axis which, in use, extends substantially vertically, the tower comprising a mounting at or towards an upper end for receiving the mounting plate, or for receiving a bracket for the mounting plate, with the tower further comprising an access opening into the tower, wherein:
the stand further comprises an audio visual - AV - rack for mounting electrical components on;
the AV rack is located inside the tower and is accessible through the access opening;
the tower further comprises at least one further opening above the intended position of electrical components on the AV rack and at least one further opening below the intended position of electrical components on the AV rack; and
the further openings are arranged to in use permit the convection of air through the tower and over the electronic components mounted on the AV rack.

2. A stand as claimed in Claim 1, where the tower is tubular and substantially enclosed and further comprises an access panel arranged to cover the access opening.

3. A stand as claimed in Claim 1 or 2, wherein the AV rack is removable from the tower through the access opening and is arranged to be removed with electronic components mounted thereon.

4. A stand as claimed in Claim 3, wherein the AV rack hooks or slots into place on one or mounts provided inside the tower.

5. A stand as claimed in any preceding claim, wherein the tower has a closed upper end with a number of louvre vents located at or towards its upper end forming the at least one further opening above the intended position of electronic components on the AV rack.

6. A stand as claimed in any preceding claim, wherein the tower comprises cable entry openings towards both the top and bottom of the tower to permit cables to pass into and out of the tower and wherein at least some of the cable entry openings may also form either the at least one further opening above or the at least one further opening below, the intended position of electronic components on the AV rack, which openings, in use, permit the convection of air through the tower.

7. A stand as claimed in any preceding claim, wherein the tower is at least partly closed at or towards a lower end by an end plate extending across the base of the tower, the end plate being arranged to receive fixings to secure the tower to a base or base plate.

8. A stand as claimed in Claim 7, further comprising a base plate arranged to be secured to the end plate of the tower by fixings, the dimensions of the base plate being sufficient to, in use, maintain the tower in an upright position so that the stand may be free standing.

9. A stand as claimed in any preceding claim, wherein the mounting plate for a flat panel display is a Video Electronics Standard Association - VESA^{®} - mounting plate.

10. A stand as claimed in any preceding claim, wherein the mounting plate for a flat panel display comprises a mounting for a camera above or below the flat panel display.

11. A stand as claimed in any preceding claim, wherein the mounting at or towards the top end of the tower comprises one or more pairs of slots for receiving hooks on a mounting plate or a bracket.

12. A stand as claimed in any preceding claim, wherein each component is formed from folded flat metal sheet.

13. A stand as claimed in any preceding claim, wherein the tower has a height of less than 1.2 metres.

14. A stand as claimed in any preceding claim, wherein the AV rack extends vertically within the tower.

15. A stand as claimed in Claim 14, wherein the tower in a plane perpendicular to a vertical axis of the tower and bisecting the rack has an internal width of between 180 mm and 250 mm and a depth of between 70 and 150 mm.
